# EUROPÄISCHE PATENTSCHRIFT

(11) **EP 3 321 539 B1**
(45) Veröffentlichungstag und Bekanntmachung des Hinweises auf die Patenterteilung: **15.05.2019**
(21) Anmeldenummer: 17001758.6
(22) Anmeldetag: 25.10.2017
(51) Int. Cl.: F16G 13/02, B65G 17/38, B66B 9/00, F16G 13/18

(54) **ANTRIEBS- UND FÖRDERKETTE**
DRIVE CHAIN AND CHAIN CONVEYOR
CHAÎNE D'ENTRAÎNEMENT ET DE TRANSPORT

(30) Priorität: 11.11.2016 DE 102016013398
(43) Veröffentlichungstag der Anmeldung: 16.05.2018
(73) Patentinhaber: Schoppel, Karin, 88212 Ravensburg (DE); Walter-Sennewald, Thomas, 88289 Waldburg (DE)
(72) Erfinder: Schoppel, Karin, 88212 Ravensburg (DE); Walter-Sennewald, Thomas, 88289 Waldburg (DE)
(74) Vertreter: Stadler, Franz

(56) Entgegenhaltungen:
- EP-A1- 0 001 194
- GB-A- 572 604
- GB-A- 2 077 881
- JP-A- H 107 224
- US-A- 2 455 624
- US-A- 5 201 269
- US-B1- 6 526 740
- US-E- R E32 941

## Beschreibung

Die vorliegende Erfindung betrifft eine Antriebs- und/oder Förderkette gemäß dem Oberbegriff des Anspruches 1, eine Fördervorrichtung gemäß dem Oberbegriff des Anspruches 12 und ein Verfahren zum Betreiben einer Fördervorrichtung gemäß dem Oberbegriff des Anspruches 15.

Antriebs- und Förderketten, zum Beispiel aus JPH107224 und GB572604 bekannt, werden in den verschiedensten technischen Anwendungen eingesetzt. Antriebsketten dienen zur Übertragung von Kräften indem von einem Antriebselement, beispielsweise ein Antriebsrad, auf die Antriebskette eine Kraft übertragen wird zum Bewegen der Antriebskette. An einer anderen Position wird diese Antriebskraft auf ein Abtriebselement, beispielsweise ein Abriebsrad, übertragen und von dem Abtriebsrad beispielsweise eine Maschine angetrieben wird.

Förderketten werden in Fördervorrichtungen eingesetzt als Zug- oder Druckorgane zum Bewegen eines Tragorganes. Das Tragorgan nimmt das zu fördernde Ladegut auf. Bei Fördervorrichtungen ohne Trennung von Kette und Tragorgan wird das Tragorgan von der Kette selbst gebildet, beispielsweise als ein Förderband oder eine Kette in einer rohrförmigen Führungsvorrichtung zum Fördern von Schüttgüt zwischen der rohrförmigen Führungsvorrichtung und der Kette bzw. den Kettengliedern. Bei Fördervorrichtungen mit Trennung von Kette und Tragorgan sind die Tragorgane gesonderte Bauteile in Ergänzung zu der Kette. Optional ist das Tragorgan mit einem Verbindungsorgan mittelbar mit der Kette verbunden. Während des Förderns des Fördergutes tritt somit kein Kontakt zwischen dem Fördergut und der Kette auf, weil das Fördergut ausschließlich von den Tragorgan bzw. Tragorganen aufgenommen wird. Die Kettenglieder können mit ersten und zweiten Gelenken zueinander verschwenkt werden mit zwei senkrecht aufeinander stehenden Schwenkachsen, wobei diese Schwenkachsen senkrecht zu einer Längsmittellinie der Kette ausgerichtet sind. Die Kette weist somit zwei Freiheitsgrade auf, d. h. die Kettenglieder können um zwei aufeinander senkrecht stehenden Schwenkachsen zueinander verschwenkt werden. In einigen technischen Anwendungen sind die Kettenglieder in der Führungsvorrichtung gegen eine Drehbewegung mit einer Dreh- bzw. Rotationsachse, welcher der Längsmittellinie der Förderkette entspricht, gesichert. Da jedoch zwischen den Kettengliedern eine Schwenkbewegung mit einer Schwenkachse als der Längsmittellinie konstruktiv ausgeschlossen ist, können Verformungen oder Fertigungsungenauigkeiten und Führungsvorrichtungen zur schraubenlinienförmigen beweglichen Führung der Kette eine Torsion der Kette mit einem Torsionsmoment mit einer Drehachse im Wesentlichen als der Längsmittelinie der Kette auslösen. Außerdem sind die konstruktiven Gestaltungsmöglichkeiten für die Führungsvorrichtungen begrenzt, weil hinsichtlich der Ausrichtung der Kettenglieder bezüglich einer Drehachse als der Längsmittellinie zwingend eine diesbezügliche Drehbewegung der Kettenglieder auszuschließen ist.

Aus der US 6,526,740 B1 ist eine Kette bekannt. Die Kette ist aus Kettenglieder zusammengesetzt und die Kettenglieder können mit ersten Gelenken um eine erste Schwenkachse zueinander verschwenkt werden und mit zweiten Gelenken um eine zweite Schwenkachse verschwenkt werden. Die Kette weist somit zwei Freiheitsgrade auf.

Die DE 10 2007 015 276 A1 zeigte ein Seitenbogenförderkette, deren Kettenglieder jeweils mittels eines um eine erste und eine zweite Achse schwenkbaren Kettengelenks miteinander verbunden sind, das einen entlang der ersten Achse angeordneten Gelenkbolzen, einen entlang der zweiten Achse angeordneten Gelenkzapfen, durch den sich der Gelenkbolzen erstreckt, und eine entlang der zweiten Achse angeordnete Aufnahmehülse, in der der Gelenkzapfen relativ zur Aufnahmehülse um die zweite Achse schwenkbar ist, umfasst, wobei die Aufnahmehülse seitliche Schwenköffnungen zum Durchtritt des Gelenkbolzens aufweist, wobei sich abwechselnde Innen- und Außenkettenglieder vorgesehen sind, ein Innenkettenglied jeweils an seinen beiden Enden eine Aufnahmehülse und mindestens eine diese miteinander verbindende Innenlasche aufweist, ein Außenkettenglied jeweils an seinen beiden Enden einen Gelenkbolzen und einen Gelenkzapfen und mindestens zwei diese miteinander verbindende Außenlaschen aufweist und die mindestens zwei Außenlachen an ihren Stirnenden jeweils eine Aufnahmehülse eines benachbarten Innenkettengliedes seitlich umfassen.

Die DE 31 21 835 A1 zeigt eine Kugelgelenk-Gliederkette mit Gliedern, die am einen Ende einen Kugelgelenkkörper und am anderen Ende eine Kugelpfanne aufweisen, in der der Kugelgelenkkörper des benachbarten Gliedes gelagert ist, wobei jedes Kettenglied in einer Axialebene in zwei Hälften geteilt ist und im Endbereich der Kugelpfanne eine Ringverbindung besitzt, wobei der Kugelgelenkkörper eine etwa halbkugelförmige Absetzung aufweist und im Bereich derselben die Kugelpfanne von einer zweiten Ringverbindung umschlossen ist, wobei beide Ringverbindungen an Gegenflächen der Kugelpfanne satt anliegende Halteringe aufweisen. Aufgrund der Ausbildung von Kegelgelenkkörpern und Kugelpfannen ist die Kugelgelenk-Gliederkette in nachteiliger Weise in der Montage und Demontage aufwendig und damit teuer, weil die Kettenglieder mehrteilig ausgebildet sind.

Aus der DE 10 2008 002 049 A1 ist ein Treppenlift zur Überwindung einer Anzahl von Stufen bekannt, aufweisend eine Liftplattform zur Aufnahme von Lasten und/oder Personen, einen mit dieser verbundenen Rollwagen und zumindest eine Führungsschiene, in welcher der Rollwagen verfahrbar ist, wobei die Führungsschiene und der Rollwagen unterhalb der Stufen angeordnet sind, und die Liftplattform oberhalb der Stufen angeordnet ist.

Die Aufgabe der vorliegenden Erfindung besteht deshalb darin, eine Antriebs- und/oder Förderkette, eine Fördervorrichtung und ein Verfahren zum Betreiben einer Fördervorrichtung zur Verfügung zu stellen, bei der an der Antriebs- und/oder Förderkette keine Torsion auftritt und eine Führungsvorrichtung der Fördervorrichtung an unterschiedlichste Geometrien einfach angepasst werden kann. Ferner soll die Antriebs- und/oder Förderkette in der Montage und Demontage einfach und kostengünstig sein.

Diese Aufgabe wird gelöst mit einer Antriebs- und/oder Förderkette, umfassend mehrere Kettenglieder, mehrere erste Gelenke, die mit je zwei benachbarten Kettengliedern verbunden sind und mit je einem ersten Gelenk die zwei benachbarten Kettenglieder um je eine erste Schwenkachse zueinander verschwenkbar sind, mehrere zweite Gelenke, die mit je zwei benachbarten Kettengliedern verbunden sind und mit je einem zweiten Gelenk die zwei benachbarten Kettenglieder um je eine zweite Schwenkachse zueinander verschwenkbar sind, wobei die ersten und zweiten Schwenkachsen im Wesentlichen senkrecht zueinander ausgerichtet sind und vorzugsweise die ersten und zweiten Schwenkachsen im Wesentlichen senkrecht zu einer Längsmittellinie der Antriebs- und/oder Förderkette ausgerichtet sind, insbesondere bei einer geraden Ausrichtung der Antriebs- und/oder Förderkette, so dass die Längsmittelinie eine Gerade bildet, wobei vorzugsweise die Antriebs- und/oder Förderkette mehrere dritte Gelenke umfasst und die dritten Gelenke mit je zwei benachbarten Kettengliedern verbunden sind und mit je einem dritten Gelenk die zwei benachbarten Kettenglieder um je eine dritte Schwenkachse zueinander verschwenkbar sind und die dritten Schwenkachsen im Wesentlichen parallel und/oder koaxial zu der Längsmittellinie der Antriebs- und/oder Förderkette ausgerichtet sind, insbesondere bei einer geraden Ausrichtung der Antriebs- und/oder Förderkette, so dass die Längsmittelinie eine Gerade bildet. Die Kette weist somit in vorteilhafter Weise drei Freiheitsgrade auf, so dass an der Kette keine Torsion bezüglich einer Drehachse im Wesentlichen als der Längsmittellinie der Kette auftritt, weil die dritten Gelenke ein Verschwenken der Kettenglieder zueinander um die dritten Schwenkachsen ermöglichen.

Die ersten und zweiten Schwenkachsen sind im Wesentlichen senkrecht zueinander ausgerichtet bedeutet insbesondere, dass die ersten und zweiten Schwenkachsen mit einer Abweichung von weniger als 30°, 20°, 10°, 5°, 3°, 2° oder 1° senkrecht zueinander ausgerichtet sind. Die dritten Schwenkachsen sind im Wesentlichen parallel und/oder koaxial zu der Längsmittellinie der Antriebs- und/oder Förderkette ausgerichtet bedeutet insbesondere, dass die dritten Schwenkachsen mit einer Abweichung von weniger als 30°, 20°, 10°, 5°, 3°, 2° oder 1° parallel und/oder koaxial zu der Längsmittellinie der Antriebs- und/oder Förderkette ausgerichtet sind.

In einer weiteren Ausgestaltung sind die Kettenglieder in Richtung der Längsmittelinie nacheinander mit den ersten Gelenken, zweiten Gelenken und dritten Gelenken gelenkig miteinander verbunden und/oder die ersten Gelenke und/oder die zweiten Gelenke und/oder die dritten Gelenke weisen einen Abstand zueinander in Richtung der Längsmittellinie auf und/oder die ersten Gelenke und/oder die zweiten Gelenke und/oder die dritten Gelenke sind getrennte unterschiedliche Baueinheiten.

In einer ergänzenden Ausgestaltung umfasst die Antriebskette drei verschiedene Kettenglieder als A-Kettenglieder, B-Kettenglieder und C-Kettenglieder.

In einer weiteren Variante sind je ein C-Kettenglied und je ein A-Kettenglied mit dem ersten Gelenk miteinander gelenkig verbunden und je ein A-Kettenglied und je ein B-Kettenglied sind mit dem zweiten Gelenk miteinander gelenkig verbunden und je ein B-Kettenglied und je ein C-Kettenglied sind mit dem dritten Gelenk miteinander gelenkig verbunden.

In einer zusätzlichen Ausgestaltung sind die ersten, zweiten und dritten Schwenkachsen im Wesentlichen senkrecht zueinander ausgerichtet, insbesondere bei einer geraden Ausrichtung der Antriebs- und/oder Förderkette, so dass die Längsmittelinie eine Gerade bildet. Die ersten, zweiten und dritten Schwenkachsen sind im Wesentlichen senkrecht zueinander ausgerichtet bedeutet insbesondere dass die ersten, zweiten und dritten Schwenkachsen mit einer Abweichung von weniger als 30°, 20°, 10°, 5°, 3°, 2° oder 1° senkrecht zueinander ausgerichtet sind.

Zweckmäßig entspricht der Abstand zwischen zwei in Richtung der Längsmittelinie aufeinanderfolgenden Gelenken, insbesondere bei sämtlichen Gelenken, wenigstens 20%, 30%, 50% oder 70% der Ausdehnung des zwischen diesen zwei Gelenken angeordneten Kettengliedes in Richtung der Längsmittelinie. Die zwei aufeinanderfolgenden Gelenke weisen somit einen ausreichend großen Abstand zueinander auf.

In einer weiteren Variante ist ein erstes und zweitens Gelenk an je einem A-Kettenglied angeordnet, so dass die erste und zweite Schwenkachse im Wesentlichen senkrecht zueinander ausgerichtet sind an diesem je einen A-Kettenglied.

In eine zusätzlichen Ausgestaltung sind je ein C-Kettenglied und je ein A-Kettenglied mit dem ersten Gelenk miteinander gelenkig verbunden indem in einem A-Kettenglied an einem Zapfen eine Lagerbohrung ausgebildet ist und in dem C-Kettenglied an zwei Schenkeln je eine Lagerbohrung ausgebildet ist und der Zapfen zwischen den zwei Schenkeln angeordnet ist, so dass die zwei Lagerbohrungen an den zwei Schenkeln mit der Lagerbohrung in dem Zapfen fluchten und ein Lagerbolzen in den zwei Lagerbohrungen an den zwei Schenkeln und der Lagerbohrung in dem Zapfen angeordnet ist oder umgekehrt, wobei umgekehrt bedeutet, dass in einem C-Kettenglied an einem Zapfen eine Lagerbohrung ausgebildet ist und in dem A-Kettenglied an zwei Schenkeln je eine Lagerbohrung ausgebildet ist

In einer weiteren Variante sind je ein A-Kettenglied und je ein B-Kettenglied mit dem zweiten Gelenk miteinander gelenkig verbunden indem in einem A-Kettenglied an zwei Schenkeln je eine Lagerbohrung ausgebildet ist und in dem B-Kettenglied eine Lagerbohrung ausgebildet ist und ein Abschnitt des B-Kettengliedes mit der Lagerbohrung zwischen den zwei Schenkeln angeordnet ist, so dass die zwei Lagerbohrungen an den zwei Schenkeln mit der Lagerbohrung an dem Abschnitt des B-Kettengliedes fluchten und ein Lagerbolzen in den zwei Lagerbohrungen an den zwei Schenkeln und der Lagerbohrung in dem Abschnitt des B-Kettengliedes angeordnet ist oder umgekehrt, wobei umgekehrt bedeutet, dass in einem B-Kettenglied an zwei Schenkeln je eine Lagerbohrung ausgebildet ist und in dem A-Kettenglied eine Lagerbohrung ausgebildet ist.

In einer weiteren Variante sind je ein B-Kettenglied und je ein C-Kettenglied mit dem dritten Gelenk miteinander gelenkig verbunden indem ein an dem B-Kettenglied ausgebildeter Verbindungsbolzen mit einem Nocken in einer Verbindungsaussparung an dem C-Kettenglied gelagert ist oder umgekehrt, wobei umgekehrt bedeutet, dass ein an dem C-Kettenglied ausgebildeter Verbindungsbolzen mit einem Nocken in einer Verbindungsaussparung an dem B-Kettenglied gelagert ist

In einer weiteren Ausgestaltung ist an dem je einen A-Kettenglied und/oder dem je einen B-Kettenglied und/oder dem je einen C-Kettenglied wenigstens eine Nocke ausgebildet zur Führung der Antriebs- und/oder Förderkette in einer Führungsvorrichtung, insbesondere wenigstens einer Führungsnut der Führungsvorrichtung, und/oder zur Mitnahme eines Tragorganes einer Fördervorrichtung.

Erfindungsgemäße Fördervorrichtung zur Förderung von Fördergut, insbesondere wenigstens eine Ware und/oder wenigstens eine Person, umfassend ein Zug- und/oder Druckorgan als eine Kette mit Kettengliedern zum Bewegen wenigstens eines an dem Zug- und/oder Druckorgan befestigten Tragorganes, das wenigstens eine Tragorgan zur Aufnahme des Fördergutes, eine Führungsvorrichtung für die Kette, vorzugsweise wenigstens ein Verbindungsorgan zur Verbindung der Kette mit dem wenigstens einen Tragorgan, vorzugsweise eine Zusatzführungsvorrichtung für das Verbindungsorgan, einen Antriebsmotor zum Bewegen der Kette, ein von dem Antriebsmotor angetriebenes Antriebselement zur Übertragung der Antriebskraft von dem Antriebsmotor auf die Kette, wobei die Kette und das wenigstens eine Tragorgan getrennt ausgebildet sind, wobei die Kettenglieder der Kette um mehrere erste Schwenkachsen und mehrere zweite Schwenkachsen, vorzugsweis mehrere dritte Schwenkachsen, zueinander verschwenkbar sind und die ersten Schwenkachsen und zweiten Schwenkachsen und, vorzugsweise dritten Schwenkachsen, im Wesentlichen aufeinander senkrecht stehen und/oder die Kette als eine in dieser Schutzrechtsanmeldung beschriebene Antriebs- und/oder Förderkette ausgebildet ist.

Vorzugsweise umfasst die Führungsvorrichtung eine Führungsbahn oder einen Führungskanal mit einer Führungsnut und in der Führungsnut die Nocken und/oder der Endbereich der Führungslagerbolzen gelagert sind.

In einer weiteren Ausgestaltung ist die Fördervorrichtung als ein Treppenlift ausgebildet mit einer Plattform und/oder einen Sitz als Tragorgan.

Erfindungsgemäßes Verfahren zum Betreiben einer Fördervorrichtung mit den Schritten: Bewegen einer Kette als ein Zugorgan oder Druckorgan indem mit einem Antriebselement eine Antriebskraft auf die Kette aufgebracht wird und das Antriebselement von einem Antriebsmotor angetrieben wird, wenigstens ein Tragorgan zur Aufnahme des Fördergutes, insbesondere wenigstens eine Ware und/oder wenigstens eine Person, aufgrund einer Verbindung des wenigstens eine Tragorganes mit der Kette bewegt wird, Führung der sich bewegenden Kette in und/oder an einer Führungsvorrichtung, Aufnahme des Fördergutes an einer ersten Position des wenigstens einen Tragorganes, Entfernen des Fördergutes an einer zweiten Position des wenigstens einen Tragorganes, wobei die Kette und das wenigstens eine Tragorgan getrennt ausgebildet sind, so dass kein Kontakt zwischen dem Fördergut und der Kette auftritt zum Fördern des Fördergutes, wobei das Verfahren mit einer in dieser Schutzrechtsanmeldung beschriebene Fördervorrichtung ausgeführt wird, so dass während des Bewegens der Kette je ein C-Kettenglied und je ein A-Kettenglied mit dem ersten Gelenk um eine erste Schwenkachse zueinander verschwenkt werden und je ein A-Kettenglied und je ein B-Kettenglied mit dem zweiten Gelenk um eine zweite Schwenkachse zueinander verschenkt werden und vorzugsweise je ein B-Kettenglied und je ein C-Kettenglied mit dem dritten Gelenk um eine dritte Schwenkachse zueinander verschwenkt werden.

In einer weiteren Ausgestaltung umfasst die Antriebs- und/oder Förderkette mehrere Kugelgelenke als erste, zweite und dritte Gelenke, die mit je zwei benachbarten Kettengliedern verbunden sind und mit je einem Kugelgelenk die zwei benachbarten Kettenglieder um beliebige Schwenkachsen als erste, zweite und dritte Schwenkachsen zueinander verschwenkbar sind und vorzugsweise umfasst die Antriebs- und/oder Förderkette zusätzlich mehrere erste Gelenke, die mit je zwei benachbarten Kettengliedern verbunden sind und mit je einem zusätzlichen ersten Gelenk die zwei benachbarten Kettenglieder um je eine erste Schwenkachse zueinander verschwenkbar sind, wobei vorzugsweise die Kugelgelenke und die zusätzlichen ersten Gelenke einen Abstand in Richtung der Längsmittelinie zueinander aufweisen und/oder als getrennte unterschiedliche Baueinheiten ausgebildet sind.

Zweckmäßig sind die zweiten und dritten, vorzugsweise ersten, Gelenke von Kugelgelenken gebildet.

In einer weiteren Ausgestaltung weist je ein Kugelgelenk eine teilkugelförmige Lagerkugel und eine komplementär dazu ausgebildete teilkugelförmige Lagerpfanne auf und die Lagerkugel ist in der Lagerpfanne gelagert.

In einer weiteren Variante ist die Länge der Lagerbolzen dahingehend ausgebildet sind, dass die Lagerbolzen an wenigstens einem Endbereich einen Führungslagerbolzen zur Führung der Antriebs- und/oder Förderkette in einer Führungsvorrichtung, insbesondere einer Führungsnut der Führungsvorrichtung, und/oder als Mitnahmelagerbolzen zur Mitnahme eines Tragorganes einer Fördervorrichtung dient.

In einer weiteren Ausgestaltung ist die Führungsvorrichtung als eine gerade und/oder gekrümmte Schiene ausgebildet, insbesondere aus einem Strangpressprofil, vorzugsweise aus Aluminium.

Zweckmäßig sind die ersten Schwenkachsen bei einer geraden Ausrichtung der Antriebs- und/oder Förderkette, so dass die Längsmittelinie eine Gerade bildet, im Wesentlichen parallel zueinander ausgerichtet und/oder im Wesentlichen identisch.

Zweckmäßig sind die zweiten Schwenkachsen bei einer geraden Ausrichtung der Antriebs- und/oder Förderkette, so dass die Längsmittelinie eine Gerade bildet, im Wesentlichen parallel zueinander ausgerichtet.

Zweckmäßig sind die dritten Schwenkachsen bei einer geraden Ausrichtung der Antriebs- und/oder Förderkette, so dass die Längsmittelinie eine Gerade bildet, im Wesentlichen parallel und/oder koaxial zueinander ausgerichtet.

In einer weiteren Variante ist das erste Gelenk dahingehend ausgebildet, so dass der erste Schwenkwinkel größer als 10°, 30°, 50°, 70°, 80° oder 90° ist.

In einer weiteren Variante ist das zweite Gelenk dahingehend ausgebildet, so dass der zweite Schwenkwinkel größer als 10°, 30°, 50°, 70°, 80° oder 90° ist.

In einer ergänzenden Ausgestaltung ist das dritte Gelenk dahingehend ausgebildet, dass der dritte Schwenkwinkel größer als 40°, 90°, 180° oder 270° ist, vorzugsweise sind mit dem je einem dritten Gelenk die zwei benachbarten Kettenglieder, insbesondere das B-Kettenglied und C-Kettenglied, um die dritte Schwenkachse mit einem beliebigen Schwenkwinkel zueinander verschwenkbar bzw. verdrehbar.

In einer weiteren Ausgestaltung weist die Führungsvorrichtung der Fördervorrichtung wenigstens einen geraden Abschnitt und/oder wenigstens einen gekrümmten Abschnitt auf, insbesondere ist der wenigstens eine gekrümmte Abschnitt schraubenlinienförmig ausgebildet.

In einer weiteren Ausführungsform sind die Kettenglieder einteilig oder mehrteilig ausgebildet, insbesondere ist das A-Kettenglied und/oder das B-Kettenglied und/oder das C-Kettenglied einteilig oder mehrteilig ausgebildet.

Vorzugsweise sind Kettenglieder, insbesondere das C-Kettenglied, mit je einer Lagerpfanne oder je einer Verbindungsaussparung mehrteilig ausgebildet. Das Kettenglied mit der Verbindungsaussparung oder der Lagerpfanne ist mehrteilig ausgebildet, damit der Nocken an dem Verbindungslagerbolzen in der Verbindungsaussparung oder die Lagerkugel in der Lagerpfanne befestigt werden kann. Beispielsweise ist die Verbindungsaussparung gebildet von einer Bohrung in einem ersten Teil und in der Bohrung ist der Nocken angeordnet und ein zweites Teil mit einer Öffnung deckt die Bohrung teilweise ab, so dass von dem zweiten Teil der Nocken in der Verbindungsaussparung gehalten ist und durch die Öffnung ist der Verbindungslagerbolzen geführt. Das zweite Teil wird beispielsweise mit Nieten an dem ersten Teil bei der Montage fixiert.

In einer zusätzlichen Variante ist das Tragorgan ein Becher, ein Wagen oder ein Container.

Zweckmäßig weisen die erste und zweite Position des Tragorganes während des Verfahrens zum Betreiben der Fördervorrichtung einen Abstand zueinander auf, vorzugsweise ist der Abstand größer als 1 m, 2m, 3m oder 5 m.

In einer weiteren Ausgestaltung ist die Fördervorrichtung eine Stetigfördervorrichtung. Mit der Stetigfördervorrichtung kann somit Fördergut kontinuierlich gefördert werden, beispielsweise indem die Tragorgane an einer umlaufenden Kette befestigt sind.

In einer weiteren Variante ist die Führungsvorrichtung modulartig ausgebildet aus wenigstens zwei oder drei unterschiedlichen Komponenten. Vorzugsweise ist wenigstens eine Komponente mit einer geraden Führungsbahn ausgebildet und wenigstens eine Komponente mit einer gekrümmten, insbesondere schraubenlinienförmigen, Führungsbahn ausgebildet.

In einer weiteren Ausführungsform ist je ein Kettenglied, insbesondere das C-Kettenglied, an der Führungsvorrichtung dahingehend gelagert, dass eine Drehbewegung des je einen Kettengliedes mit einer Dreh- oder Schwenkachse, welche der Längsmittellinie der Antriebs- und/oder Förderkette entspricht, im Wesentlichen blockiert ist. Im Wesentlichen blockiert bedeutet vorzugsweise, dass nur eine Drehbewegung kleiner als 10°, 5° oder 3° möglich ist. Beispielsweise sind die C-Kettenglieder hierzu mit Nuten in Führungsnuten gelagert.

In einer zusätzlichen Ausgestaltung tritt während des Betriebes der Fördervorrichtung kein Kontakt zwischen dem Fördergut und der Kette auf.

In einer weiteren Ausführungsform dienen die ersten und/oder zweiten und/oder dritten Gelenke zur Verbindung der Kettenglieder in Richtung der Längsmittellinie.

Zweckmäßig ist der Antriebsmotor ein Elektromotor oder ein Verbrennungsmotor oder ein Pneumatikmotor.

In einer weiteren Variante ist das Antriebselement ein umlaufendes Mitnahmeband.

In einer weiteren Variante ist die Führungsbahn der Führungsvorrichtung dahingehend ausgebildet, dass bei der von der Führungsbahn geführten Bewegung der Kettenglieder, insbesondere mittels der Führung wenigstens einer Nocke je eines Kettengliedes in wenigstens einer Nute der Führungsbahn, die Kettenglieder eine Drehbewegung um eine Drehachse als der Längsmittelinie der Antriebs- und Förderkette ausführen, insbesondere mit einem Drehwinkel größer als 3°, 5°, 10° oder 20°. Diese Drehbewegung der Kettenglieder zueinander wird von den dritten Gelenken ermöglicht.

Im Nachfolgenden werden Ausführungsbeispiele der Erfindung unter Bezugnahme auf die beigefügten Zeichnungen näher beschrieben.

Es zeigt:
- Fig. 1: eine perspektivische Ansicht einer Antriebs- und Förderkette mit drei unterschiedlichen Kettengliedern in einem ausgelenkten Zustand in einem ersten Ausführungsbeispiel,
- Fig. 2: ein vergrößerter Ausschnitt der Antriebs- und Förderkette gemäß Fig. 1 nur mit den drei unterschiedlichen Kettengliedern,
- Fig. 3: ein Längsschnitt durch die drei Kettenglieder gemäß Figur 2,
- Fig. 4: eine Explosionsdarstellung der drei unterschiedlichen Ketteglieder vor der Montage der Antriebs- und Förderkette gemäß Fig. 1,
- Fig. 5: eine weitere perspektivische Ansicht der Antriebs- und Förderkette gemäß Fig. 1,
- Fig. 6: eine weitere perspektivische Ansicht der Antriebs- und Förderkette in einem zweiten Ausführungsbeispiel,
- Fig. 7: eine Teilansicht eines oberen Endbereiches einer Führungsvorrichtung mit einer geraden Führungsbahn eines Treppenliftes,
- Fig. 8: eine Teilansicht eines unteren Endbereiches der Führungsvorrichtung mit einer geraden Führungsbahn des Treppenliftes,
- Fig. 9: eine perspektivische Ansicht eine Endbereiches der schienenartigen Führungsvorrichtung,
- Fig. 10: eine Teilansicht eines mittleren Bereiches der Führungsvorrichtung mit einer gekrümmten schraubenlinienförmigen Führungsbahn des Treppenliftes und
- Fig. 11: eine vereinfachte Ansicht eines Treppenliftes.

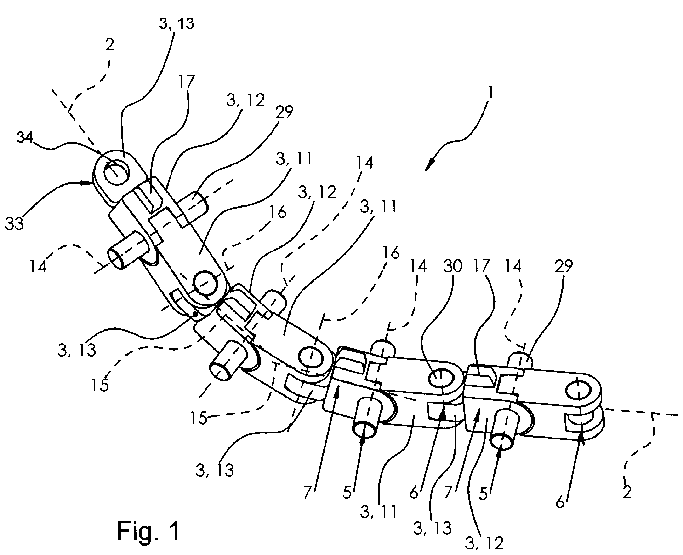

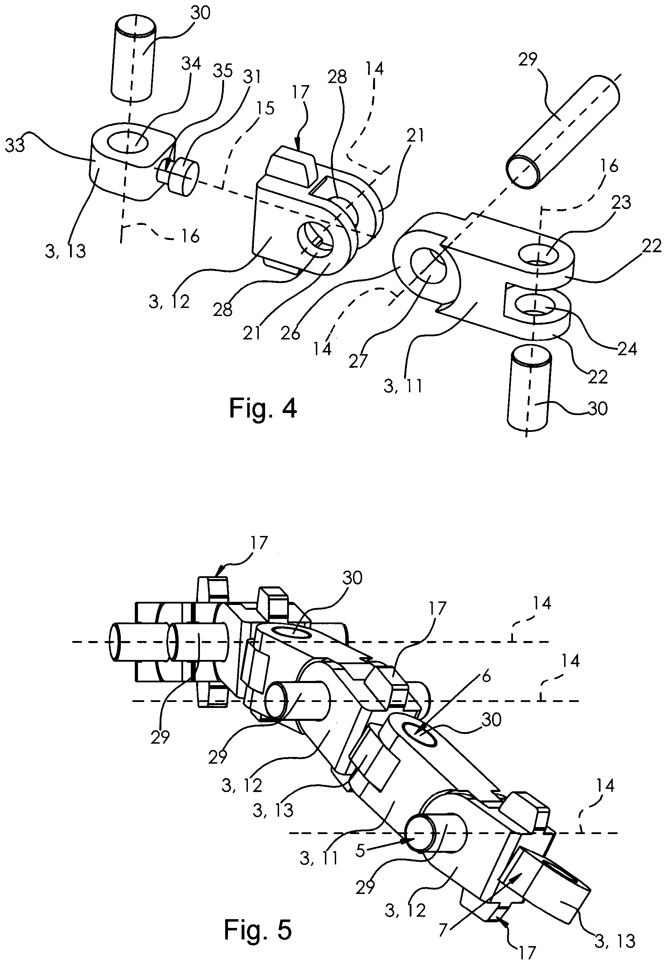

Eine in den Fig. 1 bis 5 dargestellte Antriebs- und Förderkette 1 umfasst einer Vielzahl von Kettengliedern 3, die fest miteinander verbunden sind, so dass die Antriebs- und/oder Förderkette 1 einen umlaufenden Antriebstrang bildet. Dabei weist die Antriebs- und Förderkette 1 drei unterschiedliche Kettenglieder 3 auf, nämlich ein A-Kettenglied 11, ein B-Kettenglied 13 und ein C-Kettenglied 12, die relativ zueinander verschwenkbar gelagert und miteinander verbunden sind.

Zwischen dem C-Kettenglied 12 und A-Kettenglied 11 ist eine durch einen Lagerbolzen 29 gebildete erste Schwenkachse 14 vorgesehen, so dass das A-Kettenglied 11 und C-Kettenglied 12 um die von dem Lagerbolzen 29 gebildete erstes Schwenkachse 14 zueinander verschwenkbar aneinander gelagert sind, d. h. mit einem ersten Gelenk 5 zueinander um die erste Schwenkachse 14 verschwenkbar sind und außerdem mit dem ersten Gelenk 5 in Richtung einer Längsmittellinie 2 miteinander verbunden sind zur Übertragung von Zugkräften zwischen den Kettengliedern 3. Die Längsmittelinie 2 ist im Wesentlichen mittig an der Antriebs- und/oder Förderkette 1 ausgerichtet. Bei einer geraden Ausrichtung der Antriebs- und/oder Förderkette 1 bildet die Längsmittellinie 2 eine Gerade. An einem Zapfen 26 des A-Kettengliedes 11 ist eine Lagerbohrung 27 ausgebildet und an dem C-Kettenglied 12 sind zwei Schenkel 21 mit Lagerbohrungen 28 vorhanden. Zwischen den zwei Schenkeln 21 ist somit eine Aufnahmetasche ausgebildet deren Breite geringfügig größer oder gleich ist wie die Breite des Zapfens 26, so dass der Zapfen 26 bei der Montage in die Aufnahmetasche zwischen den beiden Schenkeln 21 eingeschoben werden kann, bis die Lagerbohrungen 28 an den Schenkeln 21 mit der Lagerbohrung 27 an dem Zapfen 26 fluchten, so dass anschließend der Lagerbolzen 29 in die Lagerbohrungen 27, 28 eingeschoben und fixiert werden kann zur Ausbildung des ersten Gelenkes 5. Mit dem ersten Gelenk 5 sind das A-Kettenglied 11 und das C-Kettenglied 12 um eine erste Schwenkachse 14 zueinander verschwenkbar. Die erste Schwenkachse 14 ist wie der Lagerbolzen 29 und die Lagerbohrungen 27, 28 im Wesentlichen horizontal und im Wesentlichen senkrecht zu der Längsmittellinie 2 ausgerichtet. Die Länge des Lagerbolzens 29 ist an beiden Endbereichen größer als zur Ausbildung des ersten Gelenkes 5 notwendig, so dass diese Endbereiche auch einen Mitnehmelagerbolzen 29 für ein Verbindungsorgan 45 einer Fördervorrichtung 36 bilden.

Zwischen dem A-Kettenglied 11 und B-Kettenglied 13 ist eine durch einen Lagerbolzen 30 gebildete zweite Schwenkachse 16 vorgesehen, so dass das A-Kettenglied 11 und B-Kettenglied 13 um die von dem Lagerbolzen 30 gebildete zweite Schwenkachse 16 zueinander verschwenkbar aneinander gelagert sind, d. h. mit einem zweiten Gelenk 6 zueinander um die zweite Schwenkachse 16 verschwenkbar sind und außerdem mit dem zweiten Gelenk 6 in Richtung einer Längsmittellinie 2 miteinander verbunden sind zur Übertragung von Zugkräften zwischen den Kettengliedern 3. Hierzu ist an einem Abschnitt 33 des B-Kettengliedes 13 eine Lagerbohrung 34 ausgebildet und an dem A-Kettenglied 11 sind zwei Schenkel 22 mit Lagerbohrungen 23, 24 vorhanden. Zwischen den zwei Schenkeln 22 ist somit eine Aufnahmetasche ausgebildet deren Breite geringfügig größer oder gleich ist wie die Breite des Abschnitts 33, so dass der Abschnitt 33 des B-Kettengliedes 13 bei der Montage in die Aufnahmetasche zwischen den beiden Schenkeln 22 eingeschoben werden kann, bis die Lagerbohrungen 23, 24 an den Schenkeln 22 mit der Lagerbohrung 34 an dem Abschnitt 33 fluchten, so dass anschließend der Lagerbolzen 30 in die Lagerbohrungen 23, 24, 34 eingeschoben und fixiert werden kann zur Ausbildung des zweiten Gelenkes 6. Mit dem zweiten Gelenk 6 sind das A-Kettenglied 11 und das B-Kettenglied 13 um eine zweite Schwenkachse 16 zueinander verschwenkbar. Die zweite Schwenkachse 16 ist wie der Lagerbolzen 30 und die Lagerbohrungen 23, 23, 34 im Wesentlichen vertikal und im Wesentlichen senkrecht zu der Längsmittellinie 2 ausgerichtet.

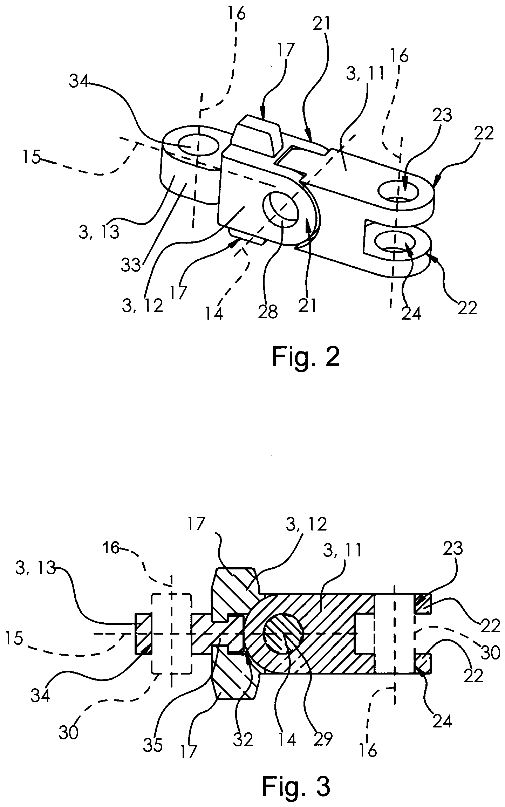

Das B-Kettenglied 13 und das C-Kettenglied 12 sind mit einem dritten Gelenk 7 miteinander verbunden und um eine dritte Schwenkachse 15 zueinander verschwenkbar. Hierzu ist an dem B-Kettenglied 13 ein Verbindungsbolzen 35 ausgebildet mit einem Nocken 31 an einem Endbereich des Verbindungsbolzens 35. An dem einteiligen C-Kettenglied 12 ist eine Verbindungsaussparung 32 als eine Durchgangsöffnung 32 ausgebildet und in der Verbindungsaussparung 32 ist ein Teil des Verbindungsbolzens 35 und die gesamte Nocke 31 angeordnet. Ein Endbereich der Verbindungsaussparung 32 ist von dem A-Kettenglied 11 verschlossen (Fig. 3). Aufgrund der Geometrie des Nockens 31 und der Verbindungsaussparung 32 sind das B-Kettenglied 13 und das C-Kettenglied 12 um eine dritte Schwenkachse 15 zueinander verschwenkbar und ferner können aufgrund eines Hinterschnittes in der Nocke 31 und der Verbindungsaussparung 32 sowie des Verschlusses der Verbindungsaussparung 32 mit dem A-Kettenglied 11 Zug- und Druckkräfte in Richtung der Längsmittellinie von dem B-Kettenglied 13 auf das C-Kettenglied 12 und umgekehrt übertragen werden. Das B-Kettenglied 13 und das C-Kettenglied 12 sind somit mit dem dritten Gelenk 7 auch miteinander verbunden. Die dritte Schwenkachse 15 ist im Wesentlichen parallel und im Wesentlichen koaxial zu der Längsmittelinie 2 ausgerichtet und außerdem im Wesentlichen senkrecht zu der ersten Schwenkachse 14 und der zweiten Schwenkachse 16. Aufgrund des dritten Gelenkes 7 treten an den Kettenglieder 3 im Wesentlichen keine Torsion und keine Torsionsmomente mit einer Drehachse im Wesentlichen als der Längsmittellinie 2 auf, d. h. die Antriebs- und Förderkette 1 kann sich frei verdrehen an dem dritten Gelenk 7 mit Drehachsen, die im Wesentlichen der Längsmittelinie 2 entsprechen. Die Antriebs- und Förderkette 1 weist somit insgesamt drei Freiheitsgrade auf mit der die Kettenglieder 3 zueinander verschwenkt werden können.

In der Antriebs- und Förderkette 1 sind somit nacheinander und wiederholend die A-Kettenglieder 11, B-Kettenglieder 13 und C-Kettenglieder 12 miteinander gelenkig verbunden. An den C-Kettengliedern 12 ist oben- und untenseitig je ein Nocke 17 bzw. ein Vorsprung 17 zur Führung der Antriebs- und Förderkette 1 in einer Führungsvorrichtung 41 der Fördervorrichtung 36 ausgebildet.

In einem weiteren, nicht dargestellten Ausführungsbeispiel der Antriebs- und Förderkette 1 weist diese nur die ersten Gelenke 5 und die zweiten Gelenk 6 und keine drittes Gelenk 7 auf bei zwei unterschiedliche Kettenglieder 3. Damit treten in dem zweiten Ausführungsbeispiel Torsionsmomente und eine Torsion bezüglich der Längsmittellinie 2 auf, weil sich die Kettenglieder 3 der Antriebs- und Förderkette 1 nicht zueinander verdrehen bzw. verschwenken können mit Schwenkachsen in der oder parallel zu der Längsmittelinie. Die Antriebs- und Förderkette 1 weist somit insgesamt zwei Freiheitsgrade auf mit der die Kettenglieder 3 zueinander verschwenkt werden können.

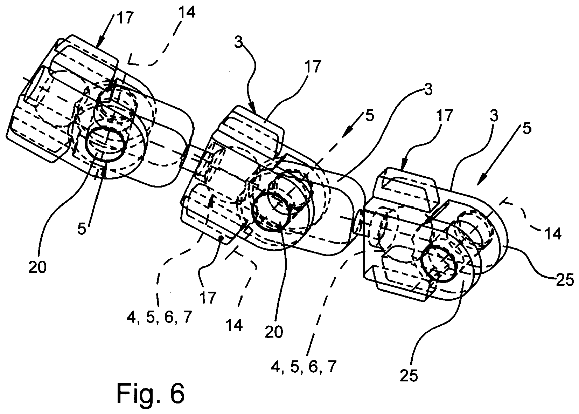

In einem in Fig. 6 dargestellten zweiten Ausführungsbeispiel der Antriebs- und Förderkette 1 weist diese Kugelgelenke 4 als erste, zweite und dritte Gelenke 5, 6, 7 auf mit dem je zwei unterschiedliche Kettenglieder 3 miteinander gelenkig verbunden sind, so dass die zwei unterschiedlichen Kettenglieder 3 um beliebige Schwenkachsen zueinander verschwenkbar sind. An je einem Kettenglied ist eine teilkugelförmige Lagerpfanne ausgebildet in der je eine teilkugelförmige Lagerkugel eines anderen Kettengliedes angeordnet und gelagert ist. Die Antriebs- und Förderkette 1 weist somit insgesamt drei Freiheitsgrade auf mit der die Kettenglieder 3 zueinander verschwenkt werden können. In Ergänzung zu den Kugelgelenken 4 weist die Antriebs- und Förderkette 1 zusätzliche erste Gelenke 5 als gesonderte Baueinheiten zu den Kugelgelenken 4 auf. An einem Kettenglied 3 sind zwei Schenkel 25 mit je einer Lagerbohrung ausgebildet und an einem Zapfen eines anderen Kettengliedes 3 ist eine Lagerbohrung ausgebildet und mit einem Lagerbolzen 20 in den Lagerbohrungen sind die Kettenglieder 3 mittels des zusätzlichen ersten Gelenkes 5 um die zusätzliche erste Schwenkachse 14 zueinander verschwenkbar.

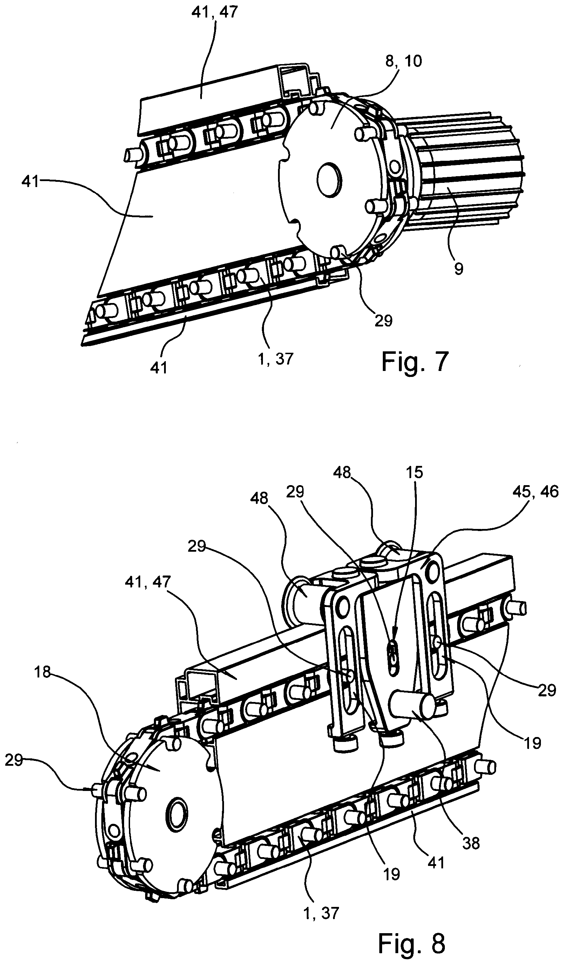

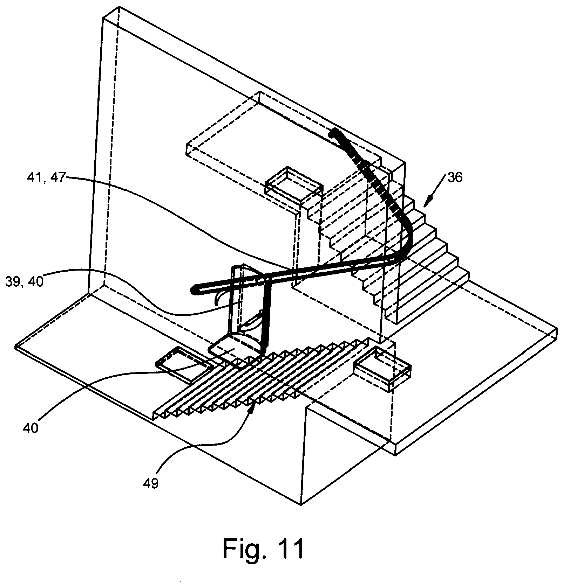

In den Fig. 7 bis 11 ist die Fördervorrichtung 36 als ein Treppenlift 44 abgebildet. Die Führungsvorrichtung 41 für die oben beschriebene Antriebs- und Förderkette 1 bildet eine Führungsbahn 42 zur Auflage der Antriebs- und Förderkette 1, d. h. die Führungsbahn 42 bildet eine Gleitlagerung für die Antriebs- und Förderkette 1 als ein Zugorgan 37. Die Antriebs- und Förderkette 1 ist somit geführt gehalten, d. h. durch die Kontur bzw. der Verlauf der Führungsbahn 42 ist die Antriebskette 1 in eine vorgegebene Richtung bewegbar. Hierzu ist die Führungsbahn 42 aus einem entsprechenden Material gebildet, beispielsweise indem die Führungsbahn eine entsprechende Beschichtung auf der Oberfläche aufweist oder vollständig aus einem entsprechenden Material besteht mit einer verminderten Reibung, beispielsweise Bronze, Messinglegierungen, Kunststoff wie beispielsweise PTFE, oder Weißmetall. Die Antriebs- und Förderkette 1 besteht wenigstens teilweise aus Stahl oder Kunststoff, so dass zwischen der Antriebs- und Förderkette 1 und der Führungsvorrichtung 41 eine geringe Reibung auftritt. An der Antriebs- und Förderkette 1 sind die Kettenglieder 3 vorzugsweise mittels Spritzgießen aus Kunststoff hergestellt und die Lagerbolzen 29, 30 sind aus Metall, insbesondere Stahl oder Aluminium ausgebildet. Optional kann die Gleitlagerung zwischen der Antriebs- und Förderkette 1 und der Führungsvorrichtung 41 auch mit einem Gleitmittel, insbesondere Schmieröl, geschmiert sein.

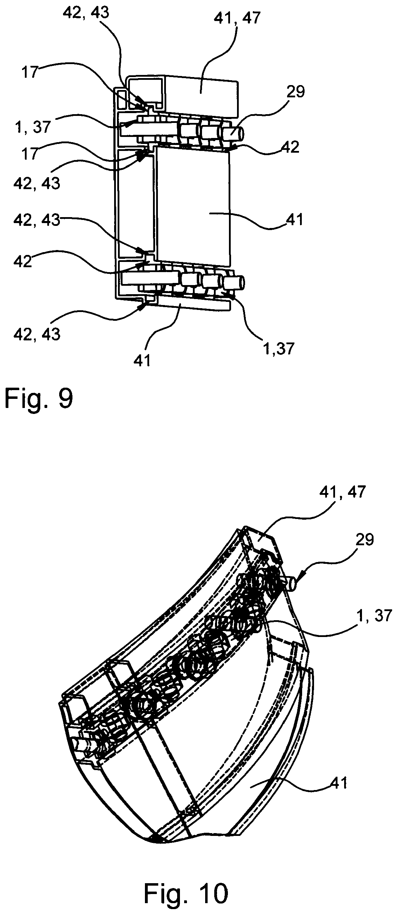

Die Führungsbahn 42 weist zwei Führungsnuten 43 auf und in den Führungsnuten 43 sind die zwei an je einem C-Kettenglied 12 gegenüberliegend bzw. oben- und untenseitig ausgebildeten Nocken 17 angeordnet. Mittels der Nocken 17 in den Führungsnuten 43 (Fig. 9) sind somit die C-Kettenglieder 12 gegen eine Drehbewegung mit einer Drehachse, welche der Längsmittellinie 2 entspricht, an der Führungsvorrichtung 41 gehalten. Die Antriebs- und Förderkette 1 ist eine umlaufende Antriebs- und Förderkette 1, d. h. die Antriebs- und Förderkette 1 ist von einem unteren Umlenkrad 18 und einem oberen Antriebsrad 8 umgelenkt. Das Antriebsrad 8 als ein Antriebselement 10 wird von einem Antriebsmotor 9 in eine Drehbewegung versetzt, so dass von dem Antriebsrad 8 auf die Antriebs- und Förderkette 1 Antriebskräfte auf die Antriebs- und Förderkette 1 übertragen werden zum Bewegen der Antriebs- und Förderkette 1. Hierzu sind an dem Antriebsrad 8 Aussparungen ausgebildet und in den Aussparungen sind die Lagerbolzen 29 der ersten Gelenke 5 und der C-Kettenglieder angeordnet, so dass formschlüssig die Antriebskräfte auf die Antriebs- und Förderkette 1 übertragen werden können. Die Führungsvorrichtung 41 und die Führungsbahn 42 weisen gerade Abschnitte und gekrümmte Abschnitte auf, insbesondere sind die gekrümmten Abschnitte spiralförmig bzw. schraubenlinienförmig ausgebildet.

Aufgrund von Fertigungsungenauigkeiten oder Verformungen der Führungsbahn 42 und/oder einer schraubenlinienförmigen Führungsbahn 42 sind für die Bewegung der Kette 1 auch Bewegungen der Kettenglieder 3 um eine Rotations- oder Drehachse als der Längsmittelinie 2 der Antriebs- und Förderkette 3 notwendig zur Vermeidung einer Torsion der Antriebs- und Förderkette 1 mit einer Drehachse als der Längsmittelinie 2. Diese Drehbewegung wird von den dritten Gelenke 7 ermöglicht. Außerdem kann die Führungsbahn 42 auch mit einer anderen, dreidimensionalen Geometrie ausgebildet sein bei der die Führungsnuten 43 unterschiedlich vertikal übereinander angeordnet sind, d. h. die Führungsnuten 43 in horizontaler Richtung unterschiedlich angeordnet sind, so dass die dritten Gelenke 7 zur Vermeidung von Torsion an der Antriebs- und Förderkette 1 zusätzlich notwendig sind, weil die C-Kettenglieder 12 während der Translationsbewegung in Längsrichtung der Längsmittellinie 2 eine Drehbewegung um eine Drehachse ausführen, welche der der Längsmittellinie 2 entspricht. Die Führungsvorrichtung 41 ist modulartig aus einzelnen geraden und gekrümmten Komponenten zusammengefügt. Damit können in vorteilhafter Weise aus wenigen unterschiedlichen Komponenten, vorzugsweis wenigstens zwei unterschiedlichen Komponenten der Führungsvorrichtung 41, unterschiedliche Treppenlifte 44 für unterschiedliche Treppen 49 gebaut werden.

Die beispielsweise aus einem umgeformten Blech oder als Aluminium-Strangpressprofil hergestellte Führungsvorrichtung 41 dient neben der Gleitlagerung der Antriebs- und Förderkette 1 und auch zur Lagerung eines Verbindungswagens 46 als ein Verbindungsorgan 45 an einer Zusatzführungsvorrichtung 47. Der Verbindungswagen 46 umfasst zwei Räder 48 sowie einen Lagerbolzen 38 und eine Gleitlagerfläche zur Lagerung auf der Zusatzführungsvorrichtung 47. Die Zusatzführungsvorrichtung 47 ist von einem fiktiven Teil eines oberen Endbereiches der Führungsvorrichtung 41 gebildet. Die Führungsvorrichtung 41 zur Lagerung des Lagerbolzens 38 ist nicht in den Figuren dargestellt. Ferner sind an dem Verbindungswagen 46 Schlitze 19 ausgebildet (Fig. 8) in denen jeweils ein Lagerbolzen 29 angeordnet ist, so dass die Lagerbolzen 29 auch als Mitnehmerlagerbolzen 29 für den Verbindungswagen 46 fungieren, d. h. der Verbindungswagen 46 die Bewegung der Antriebs- und Förderkette 1 mit ausführt. Die umlaufende Antriebs- und Förderkette 1 kann in zwei entgegensetzten Richtungen bewegt werden, so dass der Verbindungswagen 46 nach oben als auch nach unten an der schrägen Führungsbahn 42 bewegt werden kann. Die Steuerung und/oder Regelung der Bewegung, insbesondere Geschwindigkeit und/oder der Position, des Verbindungswagens 46 erfolgt mit einer nicht dargestellten Steuerungs- und/oder Regeleinrichtung.

Die Fördervorrichtung 36 ist als der Treppenlift 44 ausgebildet mit einer Plattform 40 als ein Tragorgan 39. Das Tragorgan 39 zur Aufnahme einer Person als Ladegut ist somit getrennt von der Antriebs- und Förderkette 1 und lediglich mittelbar mit dem Verbindungsorgan 45 mit der Antriebs- und Förderkette 1 verbunden. Die Plattform 40 umfasst beispielsweise einen Sitz oder einen Tragboden zur Aufnahme einer Person. Die Plattform 40 kann somit entlang der Treppe 49, insbesondere einer Wendeltreppe 49, bewegt werden.

Insgesamt betrachtet sind mit der erfindungsgemäßen Antriebs- und Förderkette 1, der erfindungsgemäßen Fördervorrichtung 36 und dem erfindungsgemäßen Verfahren zum Betreiben der Fördervorrichtung 36 wesentliche Vorteile verbunden. Die Antriebs- und Förderkette 1 mit einer Vielzahl von Kettengliedern 3 weist eine Vielzahl von ersten, zweiten und dritten Gelenken 5, 6, 7 als Drehgelenke 5, 6, 7 auf, so dass die Kettenglieder 3 der Antriebs- und Förderkette 1 bezüglich drei im Wesentlichen senkrecht aufeinander stehenden Schwenkachsen 14, 15, 16 zueinander als drei Freiheitsgrade bewegbar sind. Bei der Antriebs- und Förderkette 1 tritt somit keine Torsion auf, weil die Kettenglieder 3 um eine dritte Schwenkachse 15 im Wesentlichen koaxial zu der Längsmittelinie 2 zueinander verschwenkt werden können. Die Führungsbahn 42 der Führungsvorrichtung 41 kann somit dahingehend ausgebildet sein, dass bei der geführten Bewegung der Kettenglieder 3 die Kettenglieder 3 eine Drehbewegung um eine Drehachse als der Längsmittelinie 2 der Antriebs- und Förderkette 1 ausführen. Damit kann die Flexibilität zur Anpassung von Führungsvorrichtungen 41 für Treppenlifte 44 in Gebäuden wesentlich verbessert werden.

## Patentansprüche

1. Antriebs- und/oder Förderkette (1), umfassend
- mehrere Kettenglieder (3),
- mehrere erste Gelenke (5), die mit je zwei benachbarten Kettengliedern (11, 12) verbunden sind und mit je einem ersten Gelenk (5) die zwei benachbarten Kettenglieder (11, 12) um je eine erste Schwenkachse (14) zueinander verschwenkbar sind,
- mehrere zweite Gelenke (6), die mit je zwei benachbarten Kettengliedern (11, 13) verbunden sind und mit je einem zweiten Gelenk (6) die zwei benachbarten Kettenglieder (11, 13) um je eine zweite Schwenkachse (16) zueinander verschwenkbar sind,
- wobei die ersten und zweiten Schwenkachsen (14, 16) im Wesentlichen senkrecht zueinander ausgerichtet sind und die ersten und zweiten Schwenkachsen (14, 16) im Wesentlichen senkrecht zu einer Längsmittellinie (2) der Antriebs- und/oder Förderkette (1) ausgerichtet sind,
wobei
die Antriebs- und/oder Förderkette (1) mehrere dritte Gelenke (7) umfasst und die dritten Gelenke (7) mit je zwei benachbarten Kettengliedern (12, 13) verbunden sind und mit je einem dritten Gelenk (7) die zwei benachbarten Kettenglieder (12, 13) um je eine dritte Schwenkachse (15) zueinander verschwenkbar sind und die dritten Schwenkachsen (15) im Wesentlichen parallel und/oder koaxial zu der Längsmittellinie (2) der Antriebs- und/oder Förderkette (1) ausgerichtet sind,
**dadurch gekennzeichnet, dass**
die Antriebskette (1) drei verschiedene Kettenglieder (3) umfasst als A-Kettenglieder (11), B-Kettenglieder (13) und C-Kettenglieder (12) und an dem je einen A-Kettenglied (11) und/oder dem je einen B-Kettenglied (13) und/oder dem je einen C-Kettenglied (13) wenigstens eine Nocke (17) ausgebildet ist zur Führung der Antriebs- und/oder Förderkette (1) in einer Führungsvorrichtung (41), insbesondere wenigstens einer Führungsnut (43) der Führungsvorrichtung (41), und/oder zur Mitnahme eines Tragorganes (39) einer Fördervorrichtung (36).

2. Antriebs- und/oder Förderkette nach Anspruch 1,
**dadurch gekennzeichnet, dass**
die ersten Gelenke (5) und/oder die zweiten Gelenke (6) und/oder die dritten Gelenke (7) einen Abstand zueinander in Richtung der Längsmittellinie (2) aufweisen.

3. Antriebs- und/oder Förderkette nach Anspruch 1 oder 2,
**dadurch gekennzeichnet, dass**
Kettenglieder (11, 12, 13), insbesondere das C-Kettenglied (12), mit je einer Lagerpfanne oder je einer Verbindungsaussparung (32) mehrteilig ausgebildet sind.

4. Antriebs- und/oder Förderkette nach einem oder mehreren der vorhergehenden Ansprüche,
**dadurch gekennzeichnet, dass**
je ein C-Kettenglied (12) und je ein A-Kettenglied (11) mit dem ersten Gelenk (5) miteinander gelenkig verbunden sind und je ein A-Kettenglied (11) und je ein B-Kettenglied (13) mit dem zweiten Gelenk (6) miteinander gelenkig verbunden sind und je ein B-Kettenglied (12) und je ein C-Kettenglied (13) mit dem dritten Gelenk (7) miteinander gelenkig verbunden sind.

5. Antriebs- und/oder Förderkette nach einem oder mehreren der vorhergehenden Ansprüche,
**dadurch gekennzeichnet, dass**
die ersten, zweiten und dritten Schwenkachsen (14, 15, 16) im Wesentlichen senkrecht zueinander ausgerichtet sind.

6. Antriebs- und/oder Förderkette nach einem oder mehreren der vorhergehenden Ansprüche,
**dadurch gekennzeichnet, dass**
der Abstand zwischen zwei in Richtung der Längsmittelinie (2) aufeinanderfolgenden Gelenken (5, 6, 7) wenigstens 20%, 30%, 50% oder 70% der Ausdehnung des zwischen diesen zwei Gelenken (5, 6, 7) angeordneten Kettengliedes (3, 11, 12, 13) in Richtung der Längsmittelinie (2) entspricht.

7. Antriebs- und/oder Förderkette nach einem oder mehreren der vorhergehenden Ansprüche,
**dadurch gekennzeichnet, dass**
ein erstes und zweitens Gelenk (5, 6) an je einem A-Kettenglied (11) angeordnet ist, so dass die erste und zweite Schwenkachse (14, 16) im Wesentlichen senkrecht zueinander ausgerichtet sind an diesem je einen A-Kettenglied (11).

8. Antriebs- und/oder Förderkette nach einem oder mehreren der vorhergehenden Ansprüche,
**dadurch gekennzeichnet, dass**
je ein C-Kettenglied (12) und je ein A-Kettenglied (11) mit dem ersten Gelenk (5) miteinander gelenkig verbunden sind indem in einem A-Kettenglied (11) an einem Zapfen (26) eine Lagerbohrung (27) ausgebildet ist und in dem C-Kettenglied (12) an zwei Schenkeln (21) je eine Lagerbohrung (28) ausgebildet ist und der Zapfen (26) zwischen den zwei Schenkeln (21) angeordnet ist, so dass die zwei Lagerbohrungen (28) an den zwei Schenkeln (21) mit der Lagerbohrung (27) in dem Zapfen (26) fluchten und ein Lagerbolzen (29) in den zwei Lagerbohrungen (28) an den zwei Schenkeln (21) und der Lagerbohrung (27) in dem Zapfen (26) angeordnet ist oder umgekehrt.

9. Antriebs- und/oder Förderkette nach einem oder mehreren der vorhergehenden Ansprüche,
**dadurch gekennzeichnet, dass**
je ein A-Kettenglied (11) und je ein B-Kettenglied (13) mit dem zweiten Gelenk (6) miteinander gelenkig verbunden sind indem in einem A-Kettenglied (11) an zwei Schenkeln (22) je eine Lagerbohrung (23, 24) ausgebildet ist und in dem B-Kettenglied (13) eine Lagerbohrung (34) ausgebildet ist und ein Abschnitt (33) des B-Kettengliedes (13) mit der Lagerbohrung (34) zwischen den zwei Schenkeln (22) angeordnet ist, so dass die zwei Lagerbohrungen (23, 24) an den zwei Schenkeln (22) mit der Lagerbohrung (34) an dem Abschnitt (33) des B-Kettengliedes (13) fluchten und ein Lagerbolzen (30) in den zwei Lagerbohrungen (23, 24) an den zwei Schenkeln (22) und der Lagerbohrung (34) in dem Abschnitt (33) des B-Kettengliedes (13) angeordnet ist oder umgekehrt.

10. Antriebs- und/oder Förderkette nach einem oder mehreren der
vorhergehenden Ansprüche,
**dadurch gekennzeichnet, dass**
je ein B-Kettenglied (13) und je ein C-Kettenglied (12) mit dem dritten Gelenk (7) miteinander gelenkig verbunden sind indem ein an dem B-Kettenglied (12) ausgebildeter Verbindungsbolzen (35) mit einem Nocken (31) in einer Verbindungsaussparung (32) an dem C-Kettenglied (12) gelagert ist oder umgekehrt.

11. Antriebs- und/oder Förderkette nach einem oder mehreren der
Ansprüche 8 bis 10,
**dadurch gekennzeichnet, dass**
die Länge der Lagerbolzen (20) dahingehend ausgebildet sind, dass die Lagerbolzen (20) an wenigstens einem Endbereich einen Führungslagerbolzen zur Führung der Antriebs- und/oder Förderkette (1) in einer Führungsvorrichtung (41), insbesondere einer Führungsnut (43) der Führungsvorrichtung (41), und/oder als Mitnahmelagerbolzen zur Mitnahme eines Tragorganes (39) einer Fördervorrichtung (36) dient.

12. Fördervorrichtung (36) zur Förderung von Fördergut, insbesondere wenigstens eine Ware und/oder wenigstens eine Person, umfassend
- ein Zug- und/oder Druckorgan (37) als eine Kette (1, 37) mit Kettengliedern (3) zum Bewegen wenigstens eines an dem Zug- und/oder Druckorgan (37) befestigten Tragorganes (39),
- das wenigstens eine Tragorgan (39) zur Aufnahme des Fördergutes,
- eine Führungsvorrichtung (41) für die Kette (1),
- vorzugsweise wenigstens ein Verbindungsorgan (45) zur Verbindung der Kette (1) mit dem wenigstens einen Tragorgan (39),
- vorzugsweise eine Zusatzführungsvorrichtung (47) für das Verbindungsorgan (45),
- einen Antriebsmotor (9) zum Bewegen der Kette (1),
- ein von dem Antriebsmotor (9) angetriebenes Antriebselement (10) zur Übertragung der Antriebskraft von dem Antriebsmotor (9) auf die Kette (1),
- wobei die Kette (1) und das wenigstens eine Tragorgan (39) getrennt ausgebildet sind,
**dadurch gekennzeichnet, dass**
die Kette (1) als eine Antriebs- und/oder Förderkette (1) ausgebildet ist, umfassend
- mehrere Kettenglieder (3),
- mehrere erste Gelenke (5), die mit je zwei benachbarten Kettengliedern (11, 12) verbunden sind und mit je einem ersten Gelenk (5) die zwei benachbarten Kettenglieder (11, 12) um je eine erste Schwenkachse (14) zueinander verschwenkbar sind,
- mehrere zweite Gelenke (6), die mit je zwei benachbarten Kettengliedern (11, 13) verbunden sind und mit je einem zweiten Gelenk (6) die zwei benachbarten Kettenglieder (11, 13) um je eine zweite Schwenkachse (16) zueinander verschwenkbar sind,
- wobei die ersten und zweiten Schwenkachsen (14, 16) im Wesentlichen senkrecht zueinander ausgerichtet sind und die ersten und zweiten Schwenkachsen (14, 16) im Wesentlichen senkrecht zu einer Längsmittellinie (2) der Antriebs- und/oder Förderkette (1) ausgerichtet sind,
wobei
die Antriebs- und/oder Förderkette (1) mehrere dritte Gelenke (7) umfasst und die dritten Gelenke (7) mit je zwei benachbarten Kettengliedern (12, 13) verbunden sind und mit je einem dritten Gelenk (7) die zwei benachbarten Kettenglieder (12, 13) um je eine dritte Schwenkachse (15) zueinander verschwenkbar sind und die dritten Schwenkachsen (15) im Wesentlichen parallel und/oder koaxial zu der Längsmittellinie (2) der Antriebs- und/oder Förderkette (1) ausgerichtet sind.

13. Fördervorrichtung nach Anspruch 12,
**dadurch gekennzeichnet, dass**
die Führungsvorrichtung (41) eine Führungsbahn (42) oder einen Führungskanal umfasst mit einer Führungsnut (43) und in der Führungsnut (43) die Nocken (17) und/oder der Endbereich der Führungslagerbolzen (29) gelagert sind.

14. Fördervorrichtung nach Anspruch 12 oder 13,
**dadurch gekennzeichnet, dass**
die Fördervorrichtung (36) als ein Treppenlift (44) ausgebildet ist mit einer Plattform (40) und/oder einen Sitz als Tragorgan (39).

15. Verfahren zum Betreiben einer Fördervorrichtung (36) mit den Schritten:
- Bewegen einer Kette (1) als ein Zugorgan (37) oder Druckorgan indem mit einem Antriebselement (10) eine Antriebskraft auf die Kette (1) aufgebracht wird und das Antriebselement (10) von einem Antriebsmotor (9) angetrieben wird,
- wenigstens ein Tragorgan (39) zur Aufnahme des Fördergutes, insbesondere wenigstens eine Ware und/oder wenigstens eine Person, aufgrund einer Verbindung des wenigstens eine Tragorganes (39) mit der Kette (1) bewegt wird,
- Führung der sich bewegenden Kette (1) in und/oder an einer Führungsvorrichtung (41),
- Aufnahme des Fördergutes an einer ersten Position des wenigstens einen Tragorganes (39),
- Entfernen des Fördergutes an einer zweiten Position des wenigstens einen Tragorganes (39),
- wobei die Kette (1) und das wenigstens eine Tragorgan (39) getrennt ausgebildet sind, so dass kein Kontakt zwischen dem Fördergut und der Kette (1) auftritt zum Fördern des Fördergutes,
**dadurch gekennzeichnet, dass**
das Verfahren mit einer Fördervorrichtung (36) gemäß einem oder mehrerer der Ansprüche 12 bis 14 ausgeführt wird, so dass während des Bewegens der Kette je ein C-Kettenglied (12) und je ein A-Kettenglied (11) mit dem ersten Gelenk (5) um eine erste Schwenkachse (14) zueinander verschwenkt werden und je ein A-Kettenglied (11) und je ein B-Kettenglied (13) mit dem zweiten Gelenk (6) um eine zweite Schwenkachse (16) zueinander verschwenkt werden und vorzugsweise je ein B-Kettenglied (13) und je ein C-Kettenglied (12) mit dem dritten Gelenk (7) um eine dritte Schwenkachse (15) zueinander verschwenkt werden.

## Claims

1. Driving and/or conveying chain, comprising
- several chain links (3)
- several first hinges (5), which are connected to each two neightbouring chain links (11, 12), and the two neightbouring chain links (11, 12) are pivotable about each a first swivel axis (14) to each other by means of each a first hinge (5),
- several second hinges (6), which are connected to each two neightbouring chain links (11, 13), and the two neightbouring chain links (11, 13) are pivotable about each a second swivel axis (16) to each other by means of each a second hinge (6),
- whereby the first and second swivel axes (14, 16) are aligned substantially perpendicular to each other and the first and second swivel axes (14, 16) are aligned in the main perpendicular to a longitudinal center line (2) of the driving and/or conveying chain (1),
whereby
the driving and/or conveying chain (1) comprises several third hinges (7) and the third hinges (7) are connected to each two neightbouring chain links (11, 13) and the two neightbouring chain links (11, 13) are pivotable about each a third swivel axis (15) to each other by means of each a third hinge (7) and the third swivel axes (15) are aligned in the main parallel and/or coaxially to the longitudinal center line (2) of the driving and/or conveying chain (1),
**characterized in that**
the driving chain (1) comprises three different chain links (3) as A-chain links (11), B-chain links (13) and C-chain links (12) and at each A-chain link (11) and/or each B-chain link (13) and/or each C-chain link (13) at least one cam (17) is designed for guiding the driving and/or conveying chain (1) in a guiding device (41), in particular at least one guiding groove (43) of the guiding device (41), and/or for catching a carrying member (39) of a conveying device (36)

2. Driving and/or conveying chain according to claim 1,
**characterized in that**
the first hinges (5) and/or the second hinges (6) and/or the third hinges (7) have a distance from one another in the direction of the longitudinal center line (2).

3. Driving and/or conveying chain according to claim 1 or 2,
**characterized in that**
the chain links (11, 12, 13), in particular the C-chain link (12), with each a bearing cup or each a connecting recess (32), are designed of several parts.

4. Driving and/or conveying chain according to one or more of the preceding claims,
**characterized in that**
each one C-chain link (12) and each one A-chain link (11) with the first hinge (5) are hinged together and each one A-chain link (11) and each one B-chain link (13) with the second hinge (6) are hinged together and each a B-chain link (12) and each a C-chain link (13) with the third hinge (7) are hinged together.

5. Driving and/or conveying chain according to one or more of the preceding claims,
**characterized in that**
the first, second and third swivel axes (14, 15, 16) are aligned in the main perpendicular to each other.

6. Driving and/or conveying chain according to one or more of the preceding claims,
**characterized in that**
the distance between two successive hinges (5, 6, 7) in the direction of the longitudinal center line (2) is at least 20%, 30%, 50% or 70% of the extent of the chain link (3, 11, 12, 13), arranged between these two hinges (5, 6, 7), in the direction of the longitudinal center line (2).

7. Driving and/or conveying chain according to one or more of the preceding claims,
**characterized in that**
a first and second hinge (5, 6) is arranged to each one A-chain link (11), so that the first and second swivel axis (14, 16) are aligned in the main perpendicular to each other at this each one A-chain link (11).

8. Driving and/or conveying chain according to one or more of the preceding claims,
**characterized in that**
each one C-chain link (12) and each one A-chain link (11) are hinged together with the first hinge (5) in a way that in a A-chain link (11) at a pin (26) a bearing bore (27) is designed and in the C-chain link (12) at two limbs (21) each one bearing bore (28) is designed and the pin (26) is arranged between the two limbs (21), so that the two bearing bores (28) at the two limbs (21) are aligned to the bearing bore (27) in the pin (26) and a bearing pin (29) in the two bearing bores (28) at the two limbs (21) and the bearing bore (27) are arranged in the pin (26) or vice versa.

9. Driving and/or conveying chain according to one or more of the preceding claims,
**characterized in that**
each one A-chain link (12) and each one B-chain link (13) are hinged together with the second hinge (6) in a way that in a A-chain link (11) at two limbs (22) each one bearing bore (23, 24) is designed and in the B-chain link (13) a bearing bore (34) is designed and a section (33) of the B-chain link (13) with the bearing bore (34) is arranged between the two limbs (22), so that the two bearing bores (23, 24) at the two limbs (22) are aligned to the bearing bore (34) at the section (33) of the B-chain link (13) and the bearing pin (30) in the two bearing bores (23, 24) at the two limbs (22) and the bearing bore (34) is arranged in the section (33) of the B-chain link (13) or vice versa.

10. Driving and/or conveying chain according to one or more of the preceding claims,
**characterized in that**
each one B-chain link (13) and each one C-chain link (12) are hinged together with the third hinge (7) in a way that a connecting pin (35) with a cam (31), designed at a B-chain link (12), runs on bearings in the connecting recess (32) at the C-chain link (12) or vice versa.

11. Driving and/or conveying chain according to one or more of the claims 8 to 10,
**characterized in that**
the length of the bearing bolts (20) are designed such, that the bearing pins (20) serve at at least one end region a guide bearing pin for guiding the driving and/or conveying chain (1) in a guiding device (41), in particular one guiding groove (43) of the guiding device (41), and/or as a catching bearing pin for catching a carrying member (39) of a conveying device (36)

12. Conveying device (36) for conveying material to be conveyed, in particular at least one product and/or at least one person, comprising
- a pull and/or push member (37) as a chain (1, 37) with chain links (3) for moving at least one carrying member (39) attached to the pull and/or push member (37),
- the at least one carrying member (39) for receiving the material to be conveyed,
- a guiding device (41) for the chain (1),
- preferably at least one connecting member (45) for connecting the chain (1) to the at least one carrying member (39),
- preferably an additional guiding device (47) for the connecting member (45),
- a drive motor (9) for moving the chain (1),
- a driving element (10) driven by the drive motor (9) for transmitting the drive force from the drive motor (9) to the chain (1),
- whereby the chain (1) and the at least one carrying member (39) are formed separately,
**characterized in that**
the chain (1) is designed as a driving and/or conveying chain (1), comprising
- several chain links (3)
- several first hinges (5), which are connected to each two neighbouring chain links (11, 12), and the two neightbouring chain links (11, 12) are pivotable about each a first swivel axis (14) to each other by means of each first hinge (5),
- several second hinges (6), which are connected to each two neightbouring chain links (11, 13), and the two neightbouring chain links (11, 13) are pivotable about each a second swivel axis (16) to each other by means of each a second hinge (6),
- whereby the first and second swivel axes (14, 16) are aligned substantially perpendicular to each other and the first and second swivel axes (14, 16) are aligned in the main perpendicular to a longitudinal center line (2) of the driving and/or conveying chain (1),
whereby
the driving and/or conveying chain (1) comprises several third hinges (7) and the third hinges (7) are connected to each two neightbouring chain links (11, 13) and the two neightbouring chain links (11, 13) are pivotable about each a third swivel axis (15) to each other by means of each a third hinge (7) and the third swivel axes (15) are aligned in the main parallel and/or coaxially to the longitudinal center line (2) of the driving and/or conveying chain (1).

13. Conveying device according to claim 12,
**characterized in that**
the guide device (41) comprises a guide track (42) or a guide channel with a guiding groove (43) and the cams (17) and/or the end region of the guide bearing pins (29) run on bearings in the guiding groove (43).

14. Conveying device according to claim 12 or 13,
**characterized in that**
the conveyor device (36) is designed as a stairlift (44) with a platform (40) and/or a seat as a carrying member (39).

15. Method of operating a conveying device (36), comprising the steps of:
- moving a chain (1) as a pull member (37) or push member by applying a drive force to the chain (1) with a driving element (10) and the driving element (10) is driven by a drive motor (9),
- at least one carrying member (39) for receiving the material to be conveyed, in particular at least one product and/or at least one person, is moved due to a connection of the at least one carrying member (39) with the chain (1),
- guiding the moving chain (1) in and/or at a guiding device (41),
- receiving the material to be conveyed at a first position of the at least one carrying member (39),
- removal of the material to be conveyed at a second position of the at least one carrying member (39),
- whereby the chain (1) and the at least one carrying member (39) are formed separately, so that no contact between the material to be conveyed and the chain (1) occurs for conveying the material to be conveyed,
**characterized in that**
the method is carried out with a conveying device (36) according to one or more of claims 12 to 14, so that during the movement of the chain each one C-chain link (12) and each one A-chain link (11) with the first hinge (5) are pivoted about a first swivel axis (14) to each other and each one A-chain link (11) and each one B-chain link (13) with the second hinge (6) are pivoted about a second pivot axis (16) to each other and preferably each one B-chain link (13) and each one C-chain link (12) with the third hinge (7) are pivoted about a third pivot axis (15) to each other.

## Revendications

1. Chaîne d'entraînement et/ou de transport (1), comprenant :
- plusieurs maillons de chaîne (3),
- plusieurs premières articulations (5) qui sont connectées à chaque fois à deux maillons de chaîne adjacents (11, 12) et, par une première articulation respective (5), les deux maillons de chaîne adjacents (11, 12) pouvant pivoter l'un par rapport à l'autre autour d'un premier axe de pivotement respectif (14),
- plusieurs deuxièmes articulations (6) qui sont connectées à chaque fois à deux maillons de chaîne adjacents (11, 13) et, par une deuxième articulation respective (6), les deux maillons de chaîne adjacents (11, 13) pouvant pivoter l'un par rapport à l'autre autour d'un deuxième axe de pivotement respectif (16),
- les premier et deuxième axes de pivotement (14, 16) étant orientés essentiellement perpendiculairement l'un à l'autre et les premier et deuxième axes de pivotement (14, 16) étant orientés essentiellement perpendiculairement à un axe médian longitudinal (2) de la chaîne d'entraînement et/ou de transport (1),
la chaîne d'entraînement et/ou de transport (1) comprenant plusieurs troisièmes articulations (7) et les troisièmes articulations (7) étant connectées
connectées à chaque fois à deux maillons de chaîne adjacents (12, 13) et, par une troisième articulation respective (7), les deux maillons de chaîne adjacents (12, 13) pouvant pivoter l'un par rapport à l'autre autour d'un troisième axe de pivotement respectif (15) et les troisièmes axes de pivotement (15) étant orientés essentiellement parallèlement et/ou coaxialement à l'axe médian longitudinal (2) de la chaîne d'entraînement et/ou de transport (1),
**caractérisée en ce que**
la chaîne d'entraînement (1) comprend trois maillons de chaîne différents (3) sous forme de maillons de chaîne A (11), maillons de chaîne B (13) et maillons de chaîne C (12), et au moins une came (17) étant réalisée au niveau du maillon de chaîne A respectif (11) et/au niveau du maillon de chaîne B respectif (13) et/au niveau du maillon de chaîne C respectif (13), pour le guidage de la chaîne d'entraînement et/ou de transport (1) dans un dispositif de guidage (41), en particulier dans au moins une rainure de guidage (43) du dispositif de guidage (41), et/ou pour l'entraînement d'un organe de support (39) d'un dispositif de transport (36).

2. Chaîne d'entraînement et/ou de transport selon la revendication 1,
**caractérisée en ce que**
les premières articulations (5) et/ou les deuxièmes articulations (6) et/ou les troisièmes articulations (7) présentent un espacement les unes des autres dans la direction de l'axe médian longitudinal (2).

3. Chaîne d'entraînement et/ou de transport selon la revendication 1 ou 2,
**caractérisée en ce que**
des maillons de chaîne (11, 12, 13), en particulier le maillon de chaîne C (12), sont réalisés en plusieurs parties avec à chaque fois une cavité de palier ou à chaque fois un évidement de connexion (32).

4. Chaîne d'entraînement et/ou de transport selon l'une quelconque ou plusieurs des revendications précédentes,
**caractérisée en ce**
**qu'**à chaque fois un maillon de chaîne C (12) et à chaque fois un maillon de chaîne A (11) sont connectés de manière articulée l'un à l'autre par la première articulation (5) et à chaque fois un maillon de chaîne A (11) et à chaque fois un maillon de chaîne B (13) sont connectés de manière articulée l'un à l'autre par la deuxième articulation (6) et à chaque fois un maillon de chaîne B (12) et à chaque fois un maillon de chaîne C (13) sont connectés de manière articulée l'un à l'autre par la troisième articulation (7).

5. Chaîne d'entraînement et/ou de transport selon l'une quelconque ou plusieurs des revendications précédentes,
**caractérisée en ce que**
les premier, deuxième et troisième axe de pivotement (14, 15, 16) sont orientés essentiellement perpendiculairement les uns aux autres.

6. Chaîne d'entraînement et/ou de transport selon l'une quelconque ou plusieurs des revendications précédentes,
**caractérisée en ce que**
la distance entre deux articulations (5, 6, 7) successives dans la direction de l'axe médian longitudinal (2) correspond au moins à 20 %, 30 %, 50 % ou 70 % de l'étendue du maillon de chaîne (3, 11, 12, 13) disposé entre ces deux articulations (5, 6, 7) dans la direction de l'axe médian longitudinal (2).

7. Chaîne d'entraînement et/ou de transport selon l'une quelconque ou plusieurs des revendications précédentes,
**caractérisée en ce**
**qu'**une première et une deuxième articulation (5, 6) sont disposées au niveau d'un maillon de chaîne A respectif (11), de telle sorte que le premier et le deuxième axe de pivotement (14, 16) soient orientés essentiellement perpendiculairement l'un à l'autre au niveau de ce maillon de chaîne A respectif (11).

8. Chaîne d'entraînement et/ou de transport selon l'une quelconque ou plusieurs des revendications précédentes,
**caractérisée en ce**
**qu'**à chaque fois un maillon de chaîne C (12) et à chaque fois un maillon de chaîne A (11) sont connectés de manière articulée l'un à l'autre par la première articulation (5) par le fait qu'un alésage de palier (27) est réalisé dans un maillon de chaîne A (11) au niveau d'un tourillon (26) et qu'un alésage de palier respectif (28) est réalisé dans le maillon de chaîne C (12) au niveau de deux branches (21), et le tourillon (26) est disposé entre les deux branches (21) de telle sorte que les deux alésages de palier (28) au niveau des deux branches (21) soient alignés avec l'alésage de palier (27) dans le tourillon (26), et un boulon de palier (29) est disposé dans les deux alésages de palier (28) au niveau des deux branches (21) et dans l'alésage de palier (27) dans le tourillon (26) ou inversement.

9. Chaîne d'entraînement et/ou de transport selon l'une quelconque ou plusieurs des revendications précédentes,
**caractérisée en ce**
**qu'**à chaque fois un maillon de chaîne A (11) et à chaque fois un maillon de chaîne B (13) sont connectés de manière articulée l'un à l'autre par la deuxième articulation (6) par le fait qu'un alésage de palier respectif (23, 24) est réalisé dans un maillon de chaîne A (11) au niveau de deux branches (22) et qu'un alésage de palier (34) est réalisé dans le maillon de chaîne B (13), et une portion (33) du maillon de chaîne B (13) est disposée avec l'alésage de palier (34) entre les deux branches (22), de telle sorte que les deux alésages de palier (23, 24) au niveau des deux branches (22) soient alignés avec l'alésage de palier (34) au niveau de la portion (33) du maillon de chaîne B (13) et qu'un boulon de palier (30) soit disposé dans les deux alésages de palier (23, 24) au niveau des deux branches (22) et dans l'alésage de palier (34) dans la portion (33) du maillon de chaîne B (13) ou inversement.

10. Chaîne d'entraînement et/ou de transport selon l'une quelconque ou plusieurs des revendications précédentes,
**caractérisée en ce**
**qu'**à chaque fois un maillon de chaîne B (13) et à chaque fois un maillon de chaîne C (12) sont connectés de manière articulée l'un à l'autre par la troisième articulation (7) par le fait qu'un boulon de liaison (35) réalisé au niveau du maillon de chaîne B (12) est supporté par une came (31) dans un évidement de liaison (32) au niveau du maillon de chaîne C (12) ou inversement.

11. Chaîne d'entraînement et/ou de transport selon l'une quelconque ou plusieurs des revendications 8 à 10,
**caractérisée en ce que**
la longueur des boulons de palier (20) est réalisée de telle sorte que les boulons de palier (20) au niveau d'au moins une région d'extrémité un boulon de palier de guidage pour guider la chaîne d'entraînement et/ou de transport (1) dans un dispositif de guidage (41), en particulier dans une rainure de guidage (43) du dispositif de guidage (41), et/ou serve de boulon de palier d'entraînement pour entraîner un organe de support (39) d'un dispositif de transport (36).

12. Dispositif de transport (36) pour transporter un produit à transporter, en particulier au moins une marchandise et/ou au moins une personne, comprenant
- un organe de traction et/ou de pression (37) sous forme de chaîne (1, 37) avec des maillons de chaîne (3) pour déplacer au moins un organe de support (39) fixé à l'organe de traction et/ou de pression (37),
- l'au moins un organe de support (39) pour recevoir le produit à transporter,
- un dispositif de guidage (41) pour la chaîne (1),
- de préférence au moins un organe de liaison (45) pour relier la chaîne (1) à l'au moins un organe de support (39),
- de préférence un dispositif de guidage supplémentaire (47) pour l'organe de liaison (45),
- un moteur d'entraînement (9) pour déplacer la chaîne (1),
- un élément d'entraînement (10) entraîné par le moteur d'entraînement (9) pour le transfert de la force d'entraînement du moteur d'entraînement (9) à la chaîne (1),
- la chaîne (1) et l'au moins un organe de support (39) étant réalisés séparément,
**caractérisé en ce que**
la chaîne (1) est réalisée sous forme de chaîne d'entraînement et/ou de transport (1), comprenant
- plusieurs maillons de chaîne (3),
- plusieurs premières articulations (5) qui sont connectées à chaque fois à deux maillons de chaîne adjacents (11, 12) et, par une première articulation respective (5), les deux maillons de chaîne adjacents (11, 12) pouvant pivoter l'un par rapport à l'autre autour d'un premier axe de pivotement respectif (14),
- plusieurs deuxièmes articulations (6) qui sont connectées à chaque fois à deux maillons de chaîne adjacents (11, 13) et, par une deuxième articulation respective (6), les deux maillons de chaîne adjacents (11, 13) pouvant pivoter l'un par rapport à l'autre autour d'un deuxième axe de pivotement respectif (16),
- les premier et deuxième axes de pivotement (14, 16) étant orientés essentiellement perpendiculairement l'un à l'autre et les premier et deuxième axes de pivotement (14, 16) étant orientés essentiellement perpendiculairement à un axe médian longitudinal (2) de la chaîne d'entraînement et/ou de transport (1),
la chaîne d'entraînement et/ou de transport (1) comprenant plusieurs troisièmes articulations (7) et les troisièmes articulations (7) étant connectées à chaque fois à deux maillons de chaîne adjacents (12, 13) et, par une troisième articulation respective (7), les deux maillons de chaîne adjacents (12, 13) pouvant pivoter l'un par rapport à l'autre autour d'un troisième axe de pivotement respectif (15) et les troisièmes axes de pivotement (15) étant orientés essentiellement parallèlement et/ou coaxialement à l'axe médian longitudinal (2) de la chaîne d'entraînement et/ou de transport (1).

13. Dispositif de transport selon la revendication 12, **caractérisé en ce que**
le dispositif de guidage (41) comprend une voie de guidage (42) ou un canal de guidage avec une rainure de guidage (43) et les cames (17) et/ou la région d'extrémité des boulons de paliers de guidage (29) étant supportés dans la rainure de guidage (43).

14. Dispositif de transport selon la revendication 12 ou 13,
**caractérisé en ce que**
le dispositif de transport (36) est réalisé sous forme de monte-escalier (44), avec une plate-forme (40) et/ou un siège en tant qu'organe de support (39) .

15. Procédé pour faire fonctionner un dispositif de transport (36), comprenant les étapes suivantes :
- déplacement d'une chaîne (1) en tant qu'organe de traction (37) ou organe de pression par le fait qu'une force d'entraînement est appliquée sur la chaîne (1) avec un élément d'entraînement (10) et l'élément d'entraînement (10) est entraîné par un moteur d'entraînement (9),
- au moins un organe de support (39) pour recevoir le produit à transporter, en particulier au moins une marchandise et/ou au moins une personne, est déplacé sur la base d'une liaison de l'au moins un organe de support (39) avec la chaîne (1),
- guidage de la chaîne en mouvement (1) dans et/ou sur un dispositif de guidage (41),
- réception du produit à transporter au niveau d'une première position de l'au moins un organe de support (39),
- enlèvement du produit à transporter au niveau d'une deuxième position de l'au moins un organe de transport (39),
- la chaîne (1) et l'au moins un organe de support (39) étant réalisés séparément, de telle sorte qu'aucun contact entre le produit à transporter et la chaîne (1) ne se produise, pour le transport du produit à transporter,
**caractérisé en ce que**
le procédé est mis en oeuvre avec un dispositif de transport (36) selon l'une quelconque ou plusieurs des revendications 12 à 14, de telle sorte que pendant le déplacement de la chaîne, à chaque fois un maillon de chaîne C (12) et à chaque fois un maillon de chaîne A (11) sont pivotés l'un par rapport à l'autre autour d'un premier axe de pivotement (14) par la première articulation (5), et à chaque fois un maillon de chaîne A (11) et à chaque fois un maillon de chaîne B (13) sont pivotés l'un par rapport à l'autre autour d'un deuxième axe de pivotement (16) par la deuxième articulation (6) et de préférence à chaque fois un maillon de chaîne B (13) et à chaque fois un maillon de chaîne C (12) sont pivotés l'un par rapport à l'autre autour d'un troisième axe de pivotement (15) par la troisième articulation (7).
